# EUROPÄISCHE PATENTSCHRIFT

(11) **EP 0 651 193 B1**
(45) Veröffentlichungstag und Bekanntmachung des Hinweises auf die Patenterteilung: **08.01.1997**
(21) Anmeldenummer: 94116682.9
(22) Anmeldetag: 22.10.1994
(51) Int. Cl.: F16L 3/22, F16B 5/02

(54) **Vorrichtung zur Befestigung von strangförmigen Gegenständen an einer Unterlage**
Device for fixing an elongated article to a base
Dispositif de fixation d'objets allongés à un support

(30) Priorität: 03.11.1993 DE 9316777 U
(43) Veröffentlichungstag der Anmeldung: 03.05.1995
(73) Patentinhaber: kabelmetal electro GmbH, 30179 Hannover (DE)
(72) Erfinder: Stansbie, Michael, Ing., D-30900 Wedemark (DE); Schiefer, Hans-Jürgen, D-30167 Hannover (DE); Cauderay, Francois, Ing. (grad.), D-30853 Langenhagen (DE)

(56) Entgegenhaltungen:
- DE-A- 4 208 791
- GB-A- 1 194 478
- US-A- 4 493 468

## Beschreibung

Die Erfindung bezieht sich auf eine Vorrichtung zur Befestigung von strangförmigen Gegenständen an einer Unterlage, mit aus Federstahl bestehenden Schellen, die einen Befestigungsteil zu ihrer Festlegung an der Unterlage, zwei einteilig mit dem Befestigungsteil verbundene, durch einen Zwischenraum zur Aufnahme je eines strangförmigen Gegenstandes voneinander getrennte Schenkel und eine Verriegelung aufweisen, welche aus einem am freien Ende des einen Schenkels angebrachten, rechteckigen Bügel besteht, der über das Ende des anderen Schenkels klappbar ist (DE-OS 42 08 791).

"Strangförmige Gegenstände", die mit dieser Vorrichtung befestigt werden sollen, sind Kabel und Rohre aller Art. Stellvertretend für alle möglichen Anwendungen wird im folgenden das "Rohr" berücksichtigt. Die Unterlage, an der das Rohr befestigt werden soll, kann eine Wand, ein Mast oder jede beliebige tragfähige Konstruktion sein. Für diese Zwecke bekannte Montageschellen sind aufwendig gestaltet und zu montieren. Auch die Festlegung des Rohres in diesen Schellen ist oft schwierig.

Die Vorrichtung nach der eingangs erwähnten DE-OS 42 08 791 besteht nur aus einer einteiligen Schelle mit dem Bügel als Verriegelungselement. Sie ist daher einfach aufgebaut und einfach zu montieren. Die Schelle ist außerdem nur unwesentlich breiter als ein mit derselben zu befestigendes Rohr. Es können dementsprechend auf relativ engem Raum viele Schellen nebeneinander angebracht werden. Trotzdem kann es geschehen, daß der zur Verfügung stehende Platz nicht ausreicht, um genügend Schellen für alle Rohre, die an einem Ort befestigt werden sollen, nebeneinander anzubringen. Die Rohre müssen dann, zumindest zum Teil, auch übereinander montiert werden.

Der Erfindung liegt die Aufgabe zugrunde, die eingangs geschilderte Vorrichtung so weiterzubilden, daß Rohre auf einfache Weise übereinander montiert werden können.

Diese Aufgabe wird gemäß der Erfindung dadurch gelöst, daß mindestens zwei dieser Schellen unter Zwischenschaltung einer Halterung derart übereinander angebracht sind, daß der Befestigungsteil der einen Schelle fest mit dem in Verriegelungsstellung befindlichen Bügel der anderen Schelle verbunden ist.

Bei dieser Vorrichtung kann die bekannte vorteilhafte Schelle weiterbenutzt werden, und zwar sowohl für die "untere" Ebene als auch für die darüberliegende Ebene und eventuelle weitere Ebenen. Der Bügel der an der Unterlage montierten Schelle sowie deren Schenkel dienen als Basis zur Festlegung einer Halterung, an der eine weitere baugleiche Schelle mit ihrem Befestigungsteil angebracht werden kann. Es wird daher für die Montage nicht nur ausschließlich ein Schellentyp verwendet. Es ist vielmehr jederzeit möglich, weitere Rohre mittels dieser Schellen zu befestigen, ohne daß eine bereits montierte Schelle entfernt und beispielsweise durch eine Doppelschelle ersetzt werden muß. Es braucht hier lediglich eine weitere Schelle auf einer bereits montierten Schelle angebracht zu werden.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 eine Ansicht der Vorrichtung mit zwei übereinander montierten Rohren.
Fig. 2 und 3 die Teile einer in der Vorrichtung eingesetzten Halterung.
Fig. 4 die Halterung in Montageposition.

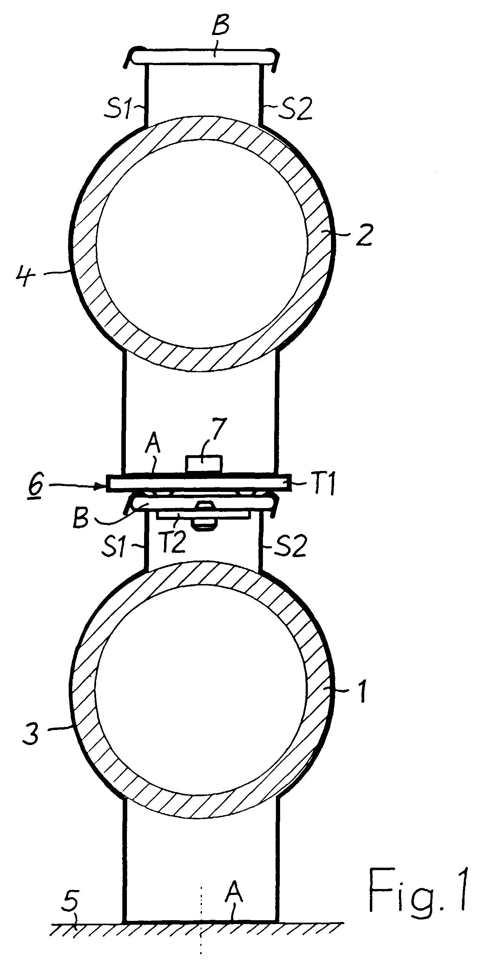

In Fig. 1 sind zwei übereinander montierte Rohre 1 und 2 dargestellt, die mittels zweier baugleicher Schellen 3 und 4 an einer Unterlage 5 befestigt sind. Die Schellen 3 und 4 bestehen aus Federstahl. Sie weisen jeweils einen Befestigungsteil A und zwei Schenkel S1 und S2 auf, zwischen denen die Rohre 1 und 2 eingespannt sind. Die Schellen 3 und 4 sind jeweils durch einen rechteckigen Bügel B verschlossen, der am Schenkel S2 unverlierbar angebracht ist und in der Schließposition der Schellen 3 und 4 über den anderen Schenkel S1 greift.

Zwischen den beiden Schellen 3 und 4 ist eine Halterung 6 angebracht, mittels derer die Schelle 4 an der Schelle 3 befestigt ist. Der Befestigungsteil A der Schelle 4 ist durch die Halterung 6 fest mit dem in Verriegelungsstellung befindlichen Bügel B der Schelle 3 verbunden. Im dargestellten Ausführungsbeispiel ist dazu eine Schraubverbindung 7 eingesetzt. Es könnte aber auch eine andere Befestigungsart verwendet werden.

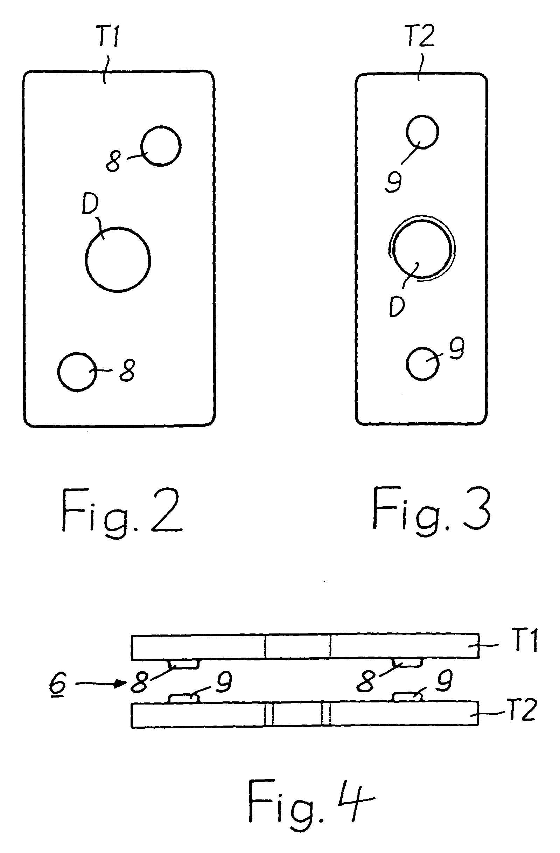

Die Halterung 6 besteht vorzugsweise aus Stahl. Sie weist einen aus Fig. 2 ersichtlichen breiteren ersten Teil T1 und einen in Fig. 3 dargestellten schmaleren zweiten Teil T2 auf. In beiden Teilen T1 und T2 ist jeweils ein Durchgangsloch D angebracht. An beiden Teilen T1 und T2 können Vorsprünge 8 einerseits und 9 andererseits angebracht sein, die in Montageposition der Halterung 6 in den Bügel B eingreifen. Durch die Vorsprünge 8 und 9 ist die Montage der Halterung 6 erleichtert. Die Position der Teile T1 und T2 ist durch dieselben festgelegt.

Der erste Teil T1 der Halterung 6 dient in Montageposition als Anlagefläche für den Befestigungsteil A der Schelle 4. Er liegt fest auf den Enden der Schenkel S1 und S2 der Schelle 3 auf. Der zweite Teil T2 der Halterung 6 liegt in Montageposition auf der dem ersten Teil T1 derselben abgewandten Seite des Bügels B der Schelle 3. Die Durchgangslöcher D der Teile T1 und T2 der Halterung 6 fluchten in Montageposition, so daß die Schraubverbindung 7 problemlos angebracht werden kann.

Die Halterung 6 besteht gemäß der zeichnerischen Darstellung aus den beiden getrennten Teilen T1 und T2. Die Teile T1 und T2 könnten auch zu einer einteiligen Halterung 6 miteinander verbunden sein.

Im Bedarfsfall könnte auf der Schelle 4 eine weitere baugleiche Schelle zur Montage eines weiteren Rohres angebracht werden. Zur Befestigung wird dann ebenfalls eine Halterung 6 verwendet.

## Patentansprüche

1. Vorrichtung zur Befestigung von strangförmigen Gegenständen an einer Unterlage, mit aus Federstahl bestehenden Schellen, die einen Befestigungsteil zu ihrer Festlegung an der Unterlage, zwei einteilig mit dem Befestigungsteil verbundene, durch einen Zwischenraum zur Aufnahme je eines strangförmigen Gegenstandes voneinander getrennte Schenkel und eine Verriegelung aufweisen, welche aus einem am freien Ende des einen Schenkels angebrachten, rechteckigen Bügel besteht, der über das Ende des anderen Schenkels klappbar ist, dadurch gekennzeichnet, daß mindestens zwei dieser Schellen (3,4) unter Zwischenschaltung einer Halterung (6) derart übereinander angebracht sind, daß der Befestigungsteil (A) der einen Schelle (3,4) fest mit dem in Verriegelungsstellung befindlichen Bügel (B) der anderen Schelle (3,4) verbunden ist.

2. Vorrichtung nach Anspruch 1, dadurch gekennzeichnet, daß ein erster Teil (T1) der Halterung (6) auf den Enden der Schenkel (S1,S2) der mit dem Bügel (B) verschlossenen Schelle (3,4) aufliegt und mit dem Befestigungsteil (A) der einen Schelle (3,4) sowie mit dem Bügel (B) der anderen Schelle (3,4) fest verbunden ist.

3. Vorrichtung nach Anspruch 1 oder 2, dadurch gekennzeichnet, daß die Halterung (6) einen zweiten, auf der dem ersten Teil (T1) abgewandten Seite des Bügels (B) liegenden Teil (T2) aufweist.

4. Vorrichtung nach einem der Ansprüche 1 bis 3, dadurch gekennzeichnet, daß an beiden Teilen (T1,T2) der Halterung (6) Vorsprünge (8,9) angebracht sind, die in Montageposition in den der Festlegung der Halterung (6) dienenden Bügel (B) eingreifen.

5. Vorrichtung nach einem der Ansprüche 1 bis 4, dadurch gekennzeichnet, daß die beiden Teile (T1,T2) der Halterung (6) zu einer einteiligen Halterung miteinander verbunden sind.

## Claims

1. Device for fixing elongated objects to a base, having clips consisting of spring steel which exhibit a fixing part for their securement to the base, two legs, which are connected in one piece to the fixing part and are separated from each other by an interspace for receiving in each case one elongated object and a locking device, which comprises a rectangular bar which is attached to the free end of the one leg and can be folded over the end of the other leg, characterized in that at least two of these clips (3, 4) are attached one on top of the other, with intermediate connection of a mount (6) in such a way that the fixing part (A) of the one clip (3, 4) is permanently connected to the bar (B), located in the locking position, of the other clip (3, 4).

2. Device according to Claim 1, characterized in that a first part (T1) of the mount (6) rests on the ends of the legs (S1, S2) of the clip (3, 4) which is sealed to the bar (B) and is permanently connected to the fixing part (A) of the one clip (3, 4) and to the bar (B) of the other clip (3, 4).

3. Device according to Claim 1 or 2, characterized in that the mount (6) has a second part (T2) which lies on that side of the bar (B) which faces away from the first part (T1).

4. Device according to one of Claims 1 to 3, characterized in that projections (8, 9), which, in the mounted position, engage in the bar (B) which serves to secure the mount (6), are provided on both parts (T1, T2) of the mount (6).

5. Device according to one of Claims 1 to 4, characterized in that the two parts (T1, T2) of the mount (6) are connected to one another to form a single-piece mount.

## Revendications

1. Dispositif de fixation d'objets allongés à un support, comprenant des brides de fixation en acier à ressorts, qui présentent une pièce de fixation permettant de les fixer au support, deux branches reliées d'une seule pièce à la pièce de fixation, séparées l'une de l'autre par un espace intermédiaire pour recevoir chacune un objet allongé, et un dispositif de verrouillage, qui est constitué d'un étrier rectangulaire appliqué à l'extrémité libre de l'une des branches, laquelle est repliable sur l'extrémité de l'autre branche, caractérisé en ce que au moins deux de ces brides (3, 4) sont disposées, avec intercalage d'une attache (6), de telle sorte que la pièce de fixation (A) de l'une des brides (3, 4) est reliée de manière fixe à l'étrier (B), se trouvant en position de verrouillage, de l'autre bride (3, 4).

2. Dispositif selon la revendication 1, caractérisé en ce qu'une première pièce (T1) de l'attache (6) est posée sur les extrémités des branches (S1, S2) de la bride (3, 4) fermée par l'étrier (B) et est reliée de manière fixe à la pièce de fixation (A) de l'une des branches (3, 4) ainsi qu'à l'étrier (B) de l'autre branche (3, 4).

3. Dispositif selon la revendication 1 ou 2, caractérisé en ce que l'attache (6) présente une deuxième pièce (T2) posée sur le côté de l'étrier (B) opposé à la première pièce (T1).

4. Dispositif selon l'une des revendications 1 à 3, caractérisé en ce que sur les deux pièces (T1, T2) de l'attache (6) sont montées des parties en saillie (8, 9) qui, en position de montage, engrènent dans l'étrier (B) servant à la fixation de l'attache (6).

5. Dispositif selon l'une des revendications 1 à 4, caractérisé en ce que les deux pièces (T1, T2) de l'attache (6) sont reliées l'une à l'autre par une attache (6) constituée d'une seule pièce.
